# EUROPEAN PATENT SPECIFICATION

(11) **EP 1 800 047 B1**
(45) Date of publication and mention of the grant of the patent: **23.12.2009**
(21) Application number: 05792226.2
(22) Date of filing: 10.10.2005
(51) Int. Cl.: F16L 37/092

(54) **PIPE COUPLING**
ROHRKUPPLUNG
RACCORD DE TUYAUX

(30) Priority: 14.10.2004 NL 1027253
(43) Date of publication of application: 27.06.2007
(73) Proprietor: Wavin B.V., 8011 CW Zwolle (NL)
(72) Inventor: ROELFSEMA, Marcel, NL-9503 PB Stadskanaal (NL); NAAKTGEBOREN, Aart, Jacob, NL-7701 LD Dedemsvaart (NL); VAN DIJK, Berend, Jan, NL-7776 XA Slagharen (NL); SNIJDERS, Johannes, Hendrikus, Gerhardus, NL-7651 RC Tubbergen (NL); SPYKMAN, Johannes, 49824 Emlichheim (DE); DE GREEF, Peter, Evert, Jacobus, NL-7701 CN Dedemsvaart (NL)
(74) Representative: van Bouwelen, Franciscus Maria
(86) International application number: PCT/NL2005/000731
(87) International publication number: WO 2006/041285

(56) References cited:
- EP-A- 0 503 737
- GB-A- 1 603 670
- US-A- 4 229 025
- US-A- 4 798 404
- US-A1- 2002 145 283

## Description

The invention relates to a pipe coupling.

Fig. 7 of EP 310 234 shows a pipe coupling having a coupling body forming a chamber wall which delimits a chamber for receiving a pipe end. At the axially outermost end of the coupling body, the chamber has an insertion opening for the respective pipe end. A passage opening and stop means are provided at the axially innermost end in the coupling body in order to limit the insertion length of the pipe end inside the coupling. A clamping ring is arranged in the chamber which engages on the exterior of the pipe end. The chamber wall is provided with a radially inwardly directed conical wall section in order to interact with the outer surface of the clamping ring in such a manner that the clamping ring engages on the pipe wall more tightly when a tensile force is applied to the pipe end. Furthermore, a tubular core part is arranged movably inside the chamber which is designed to be received in a pipe end when a pipe end is inserted into the coupling. At one end, the core part has a flange section which is situated against the stop means near the axially innermost end of the chamber. The tubular core part and the clamping ring which engages on the exterior of the pipe end are arranged in the chamber coaxially with respect to one another.
GB 1 603 670 discloses a pipe coupling having a housing comprising a body onto which a nut may be screwed. The housing has an inlet bore for tubing. After the bore there is provided a clamping ring. A hollow bush is located in said bore and has one portion engaged in the end portion of the tube. In the bore is an annular groove housing an annular seal which provides a fluid tight seal between the bush and the housing.
EP 0 503 737 discloses a nipple joint having a base body in which is coupled an insert having a spigot on which is fitted the end of a tube. On the tube is fitted a radial compression ring to lock it to the spigot. To provide radial compression of the ring, between it and a screw tightening collar is placed a bush having a truncated cone internal surface which is pushed axially onto said ring upon screwing down of the collar so as to provide a radial force component on the ring.

It is an object of the invention to provide an improved pipe coupling.

This object is achieved by a pipe coupling according to claim 1.

The coupling body and the separate outer ring together form the chamber of the coupling in which a core part and a clamping ring are accommodated. In use, one pipe end is inserted in the pipe coupling, the clamping ring coming to lie around the exterior of the pipe end and the pipe end simultaneously being arranged around the core part. The insertion depth of the core part inside the pipe end is limited by the flange section of the core part. The design according to the invention using a coupling body having an outer ring fitted to it makes it possible to insert the core part and the clamping ring in the chamber of the pipe coupling and lock them by means of the subsequently fitted outer ring in a simple manner while assembling the pipe coupling.

Preferred embodiments according to the invention are described in the dependent claims.

The invention will be described in more detail with reference to the drawing, in which:
Fig. 1 shows a cross section of an embodiment of the pipe coupling according to the invention,
Fig. 2a shows a plan view of a preferred embodiment of a clamping ring for a pipe coupling according to the invention,
Fig. 2b shows a front view of the clamping ring of Fig. 2a,
Fig. 2c shows an axial section through the clamping ring of Fig. 2a,
Fig. 3a shows a side view of an indicator strip for use with a clamping ring of Fig. 2, and
Fig. 3b shows a front view of the indicator strip of Fig. 3a.

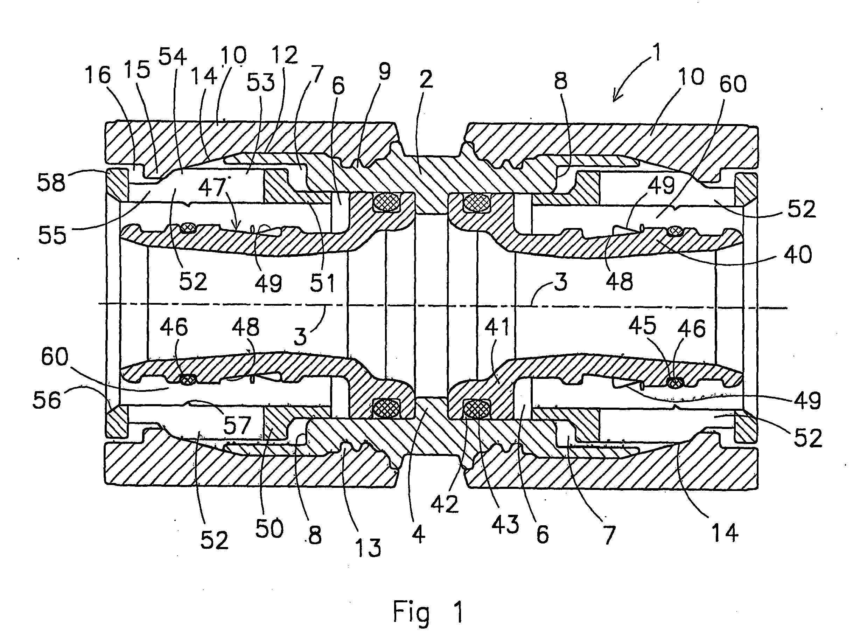

Fig. 1 shows a pipe coupling 1 comprising a substantially cylindrical coupling body 2 preferably made of plastic into which a pipe end can be inserted on both sides. The coupling body 2 has a bore 3 on both sides which are separated by an annular stop 4 which is fitted approximately in the centre. It will be clear that instead of one stop, there may also be one stop for each bore, with a pipe bend, T-piece or the like, for example, being present between the stops. The bores 3 each comprise an axially innermost bore 6 and an axially outermost bore 7. The axially outermost bore 7 has a larger diameter than the axially innermost bore 6, as a result of which a stop 8 is formed at the boundary between the axially innermost bore 6 and the axially outermost bore 7.

The coupling body 2 is provided on the exterior on both sides with a substantially ribbed profiled section 9.

The pipe coupling 1 furthermore comprises an outer ring 10, preferably made of plastic, which can be fitted on the coupling body 2 and is provided with an internally substantially ribbed profiled section 13 which, together with the profiled section 9 on the coupling body 2, forms a snap connection in the fitted state. Instead of a snap-on outer ring 10, it is also possible to use a union nut, the coupling body being provided with a threaded profile.

On the inside of the outer ring 10, there are, viewed in axial direction, from the inside out, successively, a wall section 12 with a substantially constant diameter, which grips around the coupling body 2 in the fitted state, a wall section 14 which narrows axially towards the outside and is preferably conical, an annular stop 15 and an outer recess 16. The outer recess 16 has a larger diameter than the stop 15.

In Fig. 1, in the axially innermost bore 6, a tubular core part 40, preferably made of plastic, is arranged with a flange section 41 at the innermost end, having an outer diameter such that it precisely fits in the axially innermost bore 6. In the flange section 41, an annular groove 42 is made in which a sealing ring, preferably an O-ring 43 is arranged which ensures the seal between the wall of the axially innermost bore 6 and the flange section 41.

The tubular core part 40 serves to be accommodated in a pipe end and can, for example, be used with composite pipes which consist of a relatively thick plastic inner layer, a metal barrier layer, for example made of aluminium, and a thin plastic covering layer applied on top. On the outer circumference of the tubular core part 40, an annular recess 45 is provided in which a sealing ring, preferably an O-ring 46, is accommodated which ensures the seal between the inner wall of the pipe section inserted in the pip coupling and the tubular core part 40. This O-ring 46 is preferably not situated on the far end of the tubular core part 40. In that case, any ovality resulting from a bending of the inserted pipe, could adversely affect the seal. By positioning the O-ring 46 axially more inwards, preferably approximately at the conical wall section 14, this risk is greatly reduced. Further towards the inside, the tubular core part 40 is provided, on the outer surface, with an annular recess 47 having a ring surface 48 which increases in diameter in the axial direction outwards and is preferably conical. A gripper ring 49 is accommodated in the recess 47, the length of which is smaller than the length of the recess 47. The gripper ring 49 is displaceable in the recess 47 in the axial direction along the conical ring surface 48. On the left-hand side in Fig. 1, the gripper ring 49 is shown in the unloaded state. When the gripper ring 49 is displaced axially outwards, for example by a tensile force applied to the pipe end inserted in the pipe coupling 1, then the gripper ring 49 is forced radially outwards by interaction with the conical surface, as is shown on the right-hand side in Fig. 1, as a result of which the gripper ring 49 engages more tightly on the inner wall of the pipe end. By positioning the gripper ring 49 axially more inwards than the sealing ring 46, it is prevented that the pipe end on the inside bears against the sealing ring 46 with a section which may have been damaged by the gripper ring 49, thus possibly causing a leak. A drawback of this design is that if the pipe end is not inserted sufficiently far into the coupling, it can slowly come out of the coupling and cause leakage due to varying thermal load. However, this is often not detected when the seal of the coupling is tested by pressing a liquid through it after assembly, as the sealing ring 46 still seals sufficiently well during the test period to prevent leakage. If a leak -does indeed occur later on, this is usually much more damaging than when it occurs during testing.

In an alternative embodiment (not shown) of the core part, the gripper ring is axially more outwards than the sealing ring. The drawback of this alternative embodiment is that the pipe end may have been damaged at the location of the sealing ring by the gripper ring. By contrast, this has the advantage that when the pipe end is not inserted sufficiently far into the pipe coupling, the coupling will start to leak instantly during testing, as a result of which the leak is discovered immediately and can be stopped. As mentioned above, a leak during testing is less detrimental than at a later stage.

Furthermore, on the right-hand side in Fig. 1, a ring section 51 of a clamping ring 50, the latter preferably made from plastic, is disposed in the axially innermost bore 6. The end side of the ring section 51 faces the flange section 41 of the tubular core part 40. The clamping ring 50 furthermore has flexible lips 52 which are connected to the ring section 51 and extend axially outwards beyond the axially outermost bore 7 as far as into the outer ring 10. The lips 52 are separated from one another by axial slots (not visible in Fig. 1) which extend from the ring section 51. The clamping ring 50 has an inner diameter which approximately corresponds to the outer diameter of the pipe end to be inserted. Thus, an annular space 60 is formed between the clamping ring 50 and the tubular core part 40 for receiving the pipe wall of the pipe end to be inserted.

The lips 52 have an axially innermost part 53 having a sightly smaller outer diameter than the inner diameter of the axially outermost bore 7. Furthermore, the axially innermost part 53 of the flexible lips 52 has a conical section 54 which abuts the conical wall section 14 of the outer ring 10 and interacts with it. Near the free end, the lips 52 have an axially outermost part 55 having an outer diameter which is smaller than the outer diameter of the axially innermost part 53 and is smaller than the inner diameter of the annular stop 15 on the inside of the outer ring 10. In the fitted state, the axially innermost part 55 extends beyond the annular stop 15 as far as into the- outermost recess 16 in the outer ring 10. In the fitted state of the outer ring 10, the axially outermost part 55 preferably does not extend beyond the outer ring 10 in order to prevent damage of the lips 52. Near the free end of the axially outermost part 55 of the lips 52, a radially outwardly extending edge 58 is provided on the radially outer side. The edge 58 has an outer diameter which is greater than the inner diameter of the stop 15 in the outer ring 10. In the fitted state, the edge 58 is situated in the outermost recess 16 in the outer ring 10.

The axially outermost part 55 of the flexible lips 52 tapers inwardly in the end region 56 in order to facilitate insertion of a pipe end. Furthermore, in each case one radially inwardly directed tooth 57 is provided, approximately at the conical part 54 of the lips 52, on the radially inwardly directed side, which tooth serves as grip element in order to engage on the outer surface of the pipe end to be inserted. In the fitted state, the teeth 57 will be pressed radially inwards by the interaction of the conical part 54 of the lips 52 and the conical wall part 14 into the pipe material when the core part 40 is moved axially outwards as a result of the pressure of the medium flowing through the pipe and thus forces the clamping ring outwards. Also, the outer clamping ring is pressed inwards into the pipe material by the conical wall part 14 when the pipe is pulled outwards, in order to increase the resistance to tensile strain of the connection between the pipe coupling and the pipe end. The teeth 57 are preferably positioned approximately opposite the O-ring 46, as a result of which the compression of this O-ring in the fitted state is further improved and maintained.

When a tensile force is applied on the inserted pipe end in the fitted state, the gripper ring 49 will engage on the interior of the pipe wall more tightly as a result of the interaction with the conical surface 48 and the tensile force is transmitted to the core part 40. Via the flange section 41, the tensile force is also transmitted to the clamping ring 50 which is also moved axially outwards. This results in the lips 52 of the clamping ring 50 being pushed inwards by the conical wall part 14 in the outer ring 10 and they therefore engage more tightly with the exterior of the pipe wall so that the pipe wall is pressed more tightly onto the O-ring 46 on the tubular core part 40 leading to an improved sealing action. The clamping ring 50, which is disposed around the pipe end inside the bore 3, is thus required in order to be able to transfer the tensile force of the tubular core part 40 onto the outer ring 10.

The pipe coupling according to the invention can be made to suit pipes of different sizes (inner and/or outer diameters) by using a tubular core part 40 having an outer diameter which is such that it fits into the internal pipe diameter, and using a clamping ring 50 of a suitable inner diameter such that it fits the outer diameter of the respective pipe. Only one size of coupling body with associated outer ring is thus necessary for a particular range of pipe outer diameters.

Pipe couplings may be shaped as shown in the figures, but as has already been pointed out, may also be of a different shape, such as for example a T-piece or a pipe bend. The design according to the invention, in which the clamping ring and the core part are accommodated in a chamber delimited by the coupling body and an outer ring, allows a simple design of the coupling body. The coupling body and the outer ring are preferably made of plastic in order to achieve good producibility. Preferably, the coupling body and the outer ring are produced by injection-moulding. As a result of the simple shape of the coupling body, the dies for the various coupling bodies for example a T-piece, a pipe bend or a straight coupling according to Fig. 1 can be produced in a simple manner and thus relatively inexpensively. The design of the outer ring is the same for all coupling body shapes (straight, T-piece, pipe bend, etc.). Thus, the outer ring can be produced in large quantities for use with the various coupling bodies, as a result of which the cost price per outer ring is low. Simultaneously producing pipe couplings of various types (pipe bend, T-piece, straight, etc.) can be achieved at lower cost using the design according to the invention than if the same types of pipe couplings are produced with a coupling body without a separate outer ring.

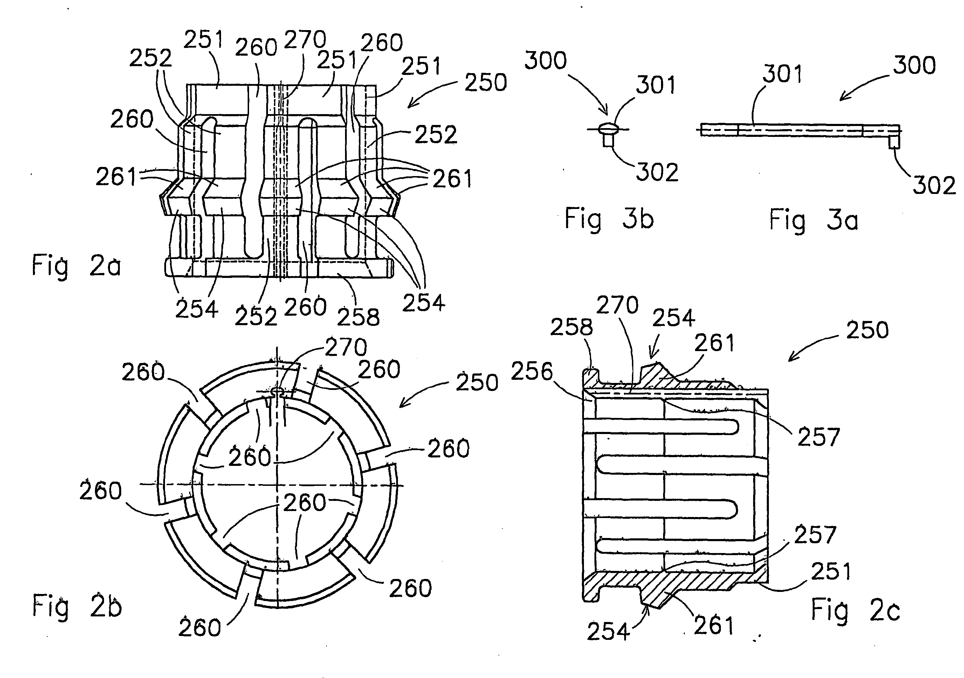

Figs. 2a-c show various views of a preferred embodiment of a clamping ring. This clamping ring differs slightly from the clamping ring 50 from Fig. 1 and is denoted by reference numeral 250. The components of the clamping ring 250 which are substantially identical to those of the clamping ring 50 are denoted by the same reference numerals increased by 200.

The clamping ring 250 is in the shape of a ring with a meander pattern extending in the circumferential direction. The clamping ring 250 has flexible lips 252 which are separated from one another by axial slots 260 which alternately extend from the axially innermost and axially outermost end. Each lip 252 of the clamping ring is connected at the axially outermost end to one adjacent lip 252 by a connecting piece 258. The same lip 252 is connected at the axially innermost end to an adjacent lip 252 on the other side connected by a connecting piece 251. In this manner, the meander pattern of the clamping ring 250 is created.

The lips 252 have a substantially constant inner diameter over their length and are provided with a radially inwardly directed tooth 257 which serves as grip element in order to engage on the outer surface of the pipe end to be inserted. The end region 256 near the axially outermost end of the lips is tapered towards the inside in order to facilitate the insertion of a pipe end. Approximately in the centre, on the outside, the lips 252 have a thickening 261 with a conical part 254 which, in the fitted state, bears against the conical wall section 14 of the lid 10 and interacts with the latter. The connecting piece 258 projects radially outwards relative to the lips 252. However, at the connecting pieces 251, the clamping ring 250 has a smaller outer diameter than at the lips 252.

A guide slot 270 is arranged in the clamping ring 250 at a lip 252, which guide slot extends from the axially frontmost end of the clamping ring 250 through the connecting piece 258 associated with the respective lip 252, the lip 252 and the connecting piece 251 associated with the respective lip 252 towards the axially rearmost end of the clamping ring 250. Viewed in cross section, the guide slot 270 is substantially in the shape of a keyhole with a relatively wide, substantially diamond-shaped part with rounded corners and a relatively narrow rectangular portion (see Fig. 2b).

The guide slot 270 serves to accommodate an indicator strip 300 which has been shown as an example in Fig. 3a and Fig. 3b. The indicator strip 300 has an elongate body 301 with a diamond-shaped cross section, the corners of the diamond shape having been rounded (see Fig. 3b). The indicator strip 300 is shorter than the length of the slot 270. At the end of the strip 300, a projection 302 is formed which projects radially inwards from the guide slot 270 when the strip 300 is arranged in the slot 270. In use, the strip 300 is partially introduced into the slot 270. When a pipe end is inserted into the plug connection, the pipe end hits the projection 302, leading to the indicator strip axially being moved inwards into the guide slot 270 together with the pipe. The indicator strip 300 has a length which is such that it disappears completely inside the clamping ring 250 when one pipe end has been inserted sufficiently far into the plug connection. The strip thus forms an indication for the technician that the pipe has been inserted sufficiently far into the plug connection to ensure a sufficiently strong coupling which seals well.

In order to prevent the indicator strip 300 from being inadvertently or otherwise pushed inwards by the technician while the pipe end has not been inserted sufficiently far into the plug connection or has not been inserted into the pipe coupling at all, the strip 300 is designed to be soft so that it gets stuck in the guide slot 270 in case it is subjected to compressive load in the axial direction. The indicator strip may also have another shape, for example a zigzag shape, so that if it is pressed inwards, the strip gets stuck in the guide slot 270, while if the indicator strip is pulled along by the pipe end at the projection, the zigzag shape is deformed and adapted to the shape of the slot.

An indicator strip with an associated guide slot can be used in other pipe couplings than the one according to the invention.

It will be clear that instead of the design of an indicator strip described above, differently designed indicator strips are also covered by the invention.

## Claims

1. Pipe coupling (1) comprising:
- a coupling body (2) and an outer ring (10) partially disposed around the coupling body, which together form a chamber for accommodating a pipe end, the chamber having an insertion opening for the respective pipe end at the axially outermost end in the outer ring and a passage opening and stop means (4) at the axially innermost end in the coupling body in order to limit the insertion length of the pipe end inside the coupling, which outer ring (10) is provided with a radially inwardly directed narrowing wall section (14);
- a clamping ring (50,250) which is arranged in the chamber and which, in use, engages on the exterior of the pipe end, and has an outer surface which is designed to interact with the narrowing wall section (14) of the outer ring (10) in such a manner that the clamping ring (50;250) engages on the pipe wall more tightly when the clamping ring (50;250) is moved axially outwards;
- a tubular core part (40) which is arranged inside the chamber so as to be coaxially movable with the clamping ring and which is designed to be received in a pipe end, which core part, at one end, has a flange section (41) which has a larger diameter than the tubular part (40), which flange section is retained by the stop means (4) near the axially innermost end of the chamber and the clamping ring (50;250) in the axial direction, **characterized in that** the outer surface of the core part (40) is provided with an annular recess (47) in which a gripper ring (49) is arranged in order to engage on the interior of the pipe wall, which annular recess (47) has a bottom surface which increases in diameter in the axially outwards direction and in which the length of the gripper ring (49) is smaller than the length of the recess (47) in order to be displaceable over the bottom surface of the recess in case of a tensile load on the pipe end, in such a manner that the gripper ring (49) is forced radially outwards by interacting with the bottom surface, resulting in the gripper ring (49) engaging more tightly on the interior of the pipe end.

2. Pipe coupling according to claim 1, in which the core part (40) is made of plastic.

3. Pipe coupling according to claim 1 or 2, in which the outer ring (10) is made of plastic.

4. Pipe coupling according to claim 1, in which one end side of the clamping ring (50) bears against the flange section (41) of the core part (40).

5. Pipe coupling according to one of the preceding claims, in which the core part (40) is provided with an annular groove (45) on the outer surface in which a sealing ring (46) is arranged in order to engage on the interior of the pipe wall.

6. Pipe coupling according to claim 5, in which the sealing ring (46) is situated axially further outwards than the gripper ring (49).

7. Pipe coupling according to claim 5, in which the gripper ring, (49) is situated axially further outwards than the sealing ring (46).

8. Pipe coupling according to one of the preceding claims, in which the flange section (41) is provided on the outer surface with an annular groove (42) in which a sealing ring (43) is arranged in order to engage on the chamber wall.

9. Pipe coupling according to one of the preceding claims, in which, in the region of the insertion opening in the outer ring (10), viewed in axial direction, from the inside out, there are, successively, the narrowing wall section (14), an annular stop (45) and an outermost recess (16), in which the outermost recess (16) has a larger diameter than the stop (15).

10. Pipe coupling according to one of the preceding claims, in which the clamping ring (50;250) comprises flexible lips (52,252) which extend in the axial direction and are connected to one another, which flexible lips (52;252) are separated from one another by axial slots (260) which extend between the flexible lips (52;252).

11. Pipe coupling according to claim 10, in which the clamping ring (50,250) comprises a ring section, (51;251) in which the flexible lips (52;252) are connected at one end to the ring section and the axial slots (260) extend from the ring section.

12. Pipe coupling according to claim 10 or 11, in which the flexible lips (52,252) are provided with a sloping surface on the outside in order to interact with the narrowing wall section (14) of the outer ring (10).

13. Pipe coupling according to claim 11, in which the ring section (51,251) of the clamping ring (50;250) is located in the part of the chamber situated in the coupling body (2) and the flexible lips (52,252) extend up to the part of the chamber situated in the outer ring (10).

14. Pipe coupling according to claim 10, in which each flexible lip (52,252) is connected with one end to a neighbouring flexible lip (52;252) and to the other neighbouring flexible lip with the other end, in such a manner that the clamping ring (50;250) has a meander pattern extending in the tangential direction.

15. Pipe coupling according to one of the preceding claims, in which the pipe coupling (1) comprises an indicator element (300) and the clamping ring (250) is provided with a guide slot (270) for accommodating the indicator element, which indicator element (300) is designed to be pulled axially inside the guide slot by a pipe end when the pipe end is inserted into the pipe coupling.

16. Pipe coupling according to claim 15, in which the indicator element (300) comprises a soft strip (301) which can be accommodated inside the guide slot and in which a projection (302) is provided on one end of the strip on which the pipe end can engage.

17. Pipe coupling according to claim 15, in which the indicator element (300) comprises a zigzag-shaped strip.and in which a projection is provided on one end of the strip on which the pipe end can engage.

## Patentansprüche

1. Rohrkopplung (1) , umfassend:
- einen Kopplungskörper (2) und einen teilweise um den Kopplungskörper angeordneten Außenring (10), die zusammen eine Kammer zum Aufnehmen eines Rohrendes ausbilden, wobei die Kammer am axial äußersten Ende im Außenring eine Einführöffnung für das entsprechende Rohrende, und eine Durchgangsöffnung und ein Haltemittel (4) am axial innersten Ende im Kopplungskörper aufweist, um die Einführlänge des Rohrendes innerhalb der Kopplung zu begrenzen, welcher Außenring (10) mit einer radial nach innen weisenden, sich verengenden Wandsektion (14) versehen ist;
- einen Klemmring (50, 250), der in der Kammer angeordnet ist und der bei Verwendung an der Außenseite des Rohrendes angreift, und eine Außenfläche aufweist, die zum Interagieren mit der sich verengenden Wandsektion (14) des Außenrings (10) derart ausgelegt ist, dass der Klemmring (50, 250) an der Rohrwand fester angreift, wenn der Klemmring (50, 250) axial nach außen bewegt wird;
- ein röhrenförmiges Kernteil (40), das innerhalb der Kammer angeordnet ist, um mit dem Klemmring koaxial beweglich zu sein, und das ausgelegt ist, in einem Rohrende empfangen zu werden, welcher Kernteil an einem Ende eine Flanschsektion (41) aufweist, die einen größeren Durchmesser als der röhrenförmige Teil (40) aufweist, welche Flanschsektion durch das nahe dem axial innersten Ende der Kammer befindliche Haltemittel (4) und durch den Klemmring (50, 250) in der axialen Richtung festgehalten wird, **dadurch gekennzeichnet, dass** die Außenfläche des Kernteils (40) mit einer ringförmigen Aussparung (47) versehen ist, in der ein Greifring (49) angeordnet ist, um an der Innenseite der Rohrwand anzugreifen, welche ringförmige Aussparung (47) eine Unterteilfläche aufweist, die im Durchmesser in der Richtung axial nach außen ansteigt, und bei der die Länge des Greifrings (49) kleiner ist als die Länge der Aussparung (47), um im Falle einer Zugkraft am Rohrende derart über die Unterteilfläche der Aussparung versetzbar zu sein, dass der Greifring (49) durch ein Interagieren mit der Unterteilfläche radial nach außen gezwungen wird, wodurch der Greifring noch fester an der Innenseite des Rohrendes angreift.

2. Rohrkopplung gemäß Anspruch 1, bei welcher der Kernteil (40) aus Plastik hergestellt ist.

3. Rohrkopplung gemäß Anspruch 1 oder 2, bei welcher der Außenring (10) aus Plastik hergestellt ist.

4. Rohrkopplung gemäß Anspruch 1, bei der eine Endseite des Klemmrings (50) gegen die Flanschsektion (41) des Kernteils (40) drückt.

5. Rohrkopplung gemäß einem der vorangegangenen Ansprüche, bei welcher der Kernteil (40) an der Außenfläche mit einer ringförmigen Nut (45) versehen ist, in der ein Abdichtring (46) angeordnet ist, um an der Innenseite der Rohrwand anzugreifen.

6. Rohrkopplung gemäß Anspruch 5, bei welcher der Abdichtring (46) axial weiter nach außen gelegen ist als der Greifring (49).

7. Rohrkopplung gemäß Anspruch 5, bei welcher der Greifring (49) axial weiter nach außen gelegen ist als der Abdichtring (46).

8. Rohrkopplung gemäß einem der vorangegangenen Ansprüche, bei der die Flanschsektion (41) an der Außenfläche mit einer ringförmigen Nut (42) versehen ist, in der ein Abdichtring (43) angeordnet ist, um an der Kammerwand anzugreifen.

9. Rohrkopplung gemäß einem der vorangegangenen Ansprüche, bei der in der Region der Einführöffnung im Außenring (10), wenn von innen nach außen in einer axialen Richtung betrachtet, nacheinander die sich verengende Wandsektion (14), ein ringförmiger Halt (15) und eine äußerste Aussparung (16) vorhanden sind, wobei die äußerste Aussparung (16) einen größeren Durchmesser als der Halt (15) aufweist.

10. Rohrkopplung gemäß einem der vorangegangenen Ansprüche, bei welcher der Klemmring (50, 250) flexible Lippen (52, 252) umfasst, die sich in der axialen Richtung erstrecken und miteinander verbunden sind, welche flexiblen Lippen (52, 252) durch sich zwischen den flexiblen Lippen (52, 252) erstreckende, axiale Schlitze (260) getrennt sind.

11. Rohrkopplung gemäß Anspruch 10, bei welcher der Klemmring (50, 250) eine Ringsektion (51, 251) umfasst, bei der die flexiblen Lippen (52, 252) an einem Ende mit der Ringsektion verbunden sind, und sich die axialen Schlitze (260) von der Ringsektion erstrecken.

12. Rohrkopplung gemäß Anspruch 10 oder 11, bei der die flexiblen Lippen (52, 252) mit einer schrägen Fläche an der Außenseite versehen sind, um mit der sich verengenden Wandsektion (14) des Außenrings (10) zu interagieren.

13. Rohrkopplung gemäß Anspruch 11, bei der die Ringsektion (51, 251) des Klemmrings (50, 250) in dem im Kopplungskörper (2) gelegenen Teil der Kammer gelegen ist, und sich die flexiblen Lippen (52, 252) zu dem im Außenring (10) gelegenen Teil der Kammer hoch erstrecken.

14. Rohrkopplung gemäß Anspruch 10, bei der jede flexible Lippe (52, 252) mit einem Ende mit einer benachbarten flexiblen Lippe (52, 252) verbunden ist, und mit dem anderen Ende mit der anderen benachbarten, flexiblen Lippe, so dass der Klemmring (50, 250) ein sich in der Tangentialrichtung erstreckendes Labyrinthmuster aufweist.

15. Rohrkopplung gemäß einem der vorangegangenen Ansprüche, bei der die Rohrkopplung (1) ein Indikatorelement (300) umfasst, und der Klemmring (250) mit einem Führungsschlitz (270) zum Aufnehmen des Indikatorelements (300) versehen ist, welches Indikatorelement (300) ausgelegt ist, durch ein Rohrende axial in den Führungsschlitz gezogen zu werden, wenn das Rohrende in die Rohrkopplung eingeführt wird.

16. Rohrkopplung gemäß Anspruch 15, bei der das Indikatorelement (300) ein weiches Band (301) umfasst, das innerhalb des Führungsschlitzes aufgenommen werden kann, und bei der ein Vorsprung (302) an einem Ende des Bandes vorgesehen ist, an dem das Rohrende angreifen kann.

17. Rohrkopplung gemäß Anspruch 15, bei der das Indikatorelement (300) ein zickzack-förmiges Band umfasst, und bei der ein Vorsprung an einem Ende des Bandes vorgesehen ist, an dem das Rohrende angreifen kann.

## Revendications

1. Raccord (1) de tuyaux comprenant:
un corps (2) de raccord et une bague externe (10) partiellement disposée autour du corps de raccord, qui forment ensemble une chambre pour loger une extrémité d'un tuyau, la chambre ayant une ouverture d'insertion pour l'extrémité respective du tuyau au niveau de l'extrémité la plus axialement à l'extérieur dans la bague externe et une ouverture de passage et un moyen d'arrêt (4) à l'extrémité la plus axialement à l'intérieur dans le corps de raccord afin de limiter la longueur d'insertion de l'extrémité du tuyau à l'intérieur du raccord, laquelle bague externe (10) est munie d'une section (14) de paroi se rétrécissant orientée de manière radialement rentrante;
une bague de serrage (50; 250) qui est agencée dans la chambre et qui, en utilisation, s'engage sur la partie extérieure de l'extrémité du tuyau, et a une surface externe qui est conçue pour interagir avec la section (14) de paroi se rétrécissant de la bague externe (10) de sorte que la bague de serrage (50; 250) s'engage sur la paroi du tuyau de façon plus étroite lorsque la bague de serrage (50; 250) est déplacé axialement vers l'extérieur;
une partie centrale tubulaire (40) qui est agencée à l'intérieur de la chambre de sorte à pouvoir se déplacer coaxialement avec la bague de serrage et qui est conçue pour être reçue dans une extrémité de tuyau, laquelle partie centrale, à une extrémité, a une section (41) de bride qui a un diamètre plus grand que la partie tubulaire (40), laquelle section de bride est retenue par le moyen d'arrêt (4) près de l'extrémité la plus axialement à l'intérieur de la chambre et de la bague de serrage (50; 250) dans la direction axiale, **caractérisé en ce que**
la surface externe de la partie centrale (40) est munie d'un évidement annulaire (47) dans lequel une bague de saisie (49) est agencée afin de s'engager sur la partie intérieure de la paroi du tuyau, lequel évidement annulaire (47) a une surface inférieure avec un diamètre qui augmente dans la direction axialement sortante et dans laquelle la longueur de la bague de saisie (49) est inférieure à la longueur de l'évidement (47) afin de pouvoir se déplacer sur la surface inférieure de l'évidement dans le cas d'une charge de traction sur l'extrémité du tuyau, de sorte que la bague de saisie (49) soit poussée radialement vers l'extérieur en interagissant avec la surface inférieure, entraînant un engagement plus étroit de la bague de saisie (49) sur la partie intérieure de l'extrémité du tuyau.

2. Raccord de tuyaux selon la revendication 1, dans lequel la partie centrale (40) est faite de plastique.

3. Raccord de tuyaux selon la revendication 1 ou 2, dans lequel la bague externe (10) est faite de plastique.

4. Raccord de tuyaux selon la revendication 1, dans lequel un côté d'extrémité de la bague de serrage (50) s'appuie sur la section (41) de bride de la partie centrale (40).

5. Raccord de tuyaux selon l'une des revendications précédentes, dans lequel la partie centrale (40) est munie d'une rainure annulaire (45) sur la surface externe dans laquelle une bague d'étanchéité (46) est agencée afin de s'engager sur la partie intérieure de la paroi du tuyau.

6. Raccord de tuyaux selon la revendication 5, dans lequel la bague d'étanchéité (46) est située axialement plus vers l'extérieur que la bague de saisie (49).

7. Raccord de tuyaux selon la revendication 5, dans lequel la bague de saisie (49) est située axialement plus vers l'extérieur que la bague d'étanchéité (46).

8. Raccord de tuyaux selon l'une des revendications précédentes, dans lequel la section (41) de bride est munie, sur la surface externe, d'une rainure annulaire (42) dans laquelle une bague d'étanchéité (43) est agencée afin de s'engager sur la paroi de la chambre.

9. Raccord de tuyaux selon l'une des revendications précédentes, dans lequel, dans la région de l'ouverture d'insertion dans la bague externe (10), en regardant dans la direction axiale, à l'envers, on trouve successivement, la section (14) de paroi se rétrécissant, un élément d'arrêt annulaire (15) et un évidement (16) le plus à l'extérieur, où l'évidement (16) le plus à l'extérieur a un diamètre plus grand que l'élément d'arrêt (15).

10. Raccord de tuyaux selon l'une des revendications précédentes, dans lequel la bague de serrage (50; 250) comprend des lèvres flexibles (52; 252) qui s'étendent dans la direction axiale et qui sont reliées entre elles, lesquelles lèvres flexibles (52; 252) sont séparées les unes des autres par des fentes axiales (260) qui s'étendent entre les lèvres flexibles (52; 252).

11. Raccord de tuyaux selon la revendication 10, dans lequel la bague de serrage (50; 250) comprend une section annulaire (51; 251), dans laquelle les lèvres flexibles (52; 252) sont reliées à une extrémité à la section annulaire et les fentes axiales (260) s'étendent de la section annulaire.

12. Raccord de tuyaux selon la revendication 10 ou 11, dans lequel les lèvres flexibles (52; 252) sont munies d'une surface inclinée sur la partie extérieure afin d'interagir avec la section (14) de paroi se rétrécissant de la bague externe (10).

13. Raccord de tuyaux selon la revendication 11, dans lequel la section annulaire (51; 251) de la bague de serrage (50; 250) est située dans la partie de la chambre située dans le corps (2) de raccord et les lèvres flexibles (52; 252) s'étendent jusqu'à la partie de la chambre située dans la bague externe (10).

14. Raccord de tuyaux selon la revendication 10, dans lequel chaque lèvre flexible (52; 252) est reliée avec une extrémité à une lèvre flexible avoisinante (52; 252) et à l'autre lèvre flexible avoisinante avec l'autre extrémité, de sorte que la bague de serrage (50; 250) possède un motif en méandre s'étendant dans la direction tangentielle.

15. Raccord de tuyaux selon l'une des revendications précédentes, dans lequel le raccord (1) de tuyaux comprend un élément indicateur (300) et la bague de serrage (250) est munie d'une fente de guidage (270) pour loger l'élément indicateur (300), lequel élément indicateur (300) est conçu pour être tiré axialement à l'intérieur de la fente de guidage par une extrémité du tuyau lorsque l'extrémité du tuyau est insérée dans le raccord de tuyaux.

16. Raccord de tuyaux selon la revendication 15, dans lequel l'élément indicateur (300) comprend une bande souple (301) qui peut être logée à l'intérieur de la fente de guidage et où une projection (302) est pourvue sur une extrémité de la bande sur laquelle l'extrémité du tuyau peut s'engager.

17. Raccord de tuyaux selon la revendication 15, dans lequel l'élément indicateur (300) comprend une bande en forme de zigzag et dans lequel une projection est pourvue sur une extrémité de la bande sur laquelle l'extrémité du tuyau peut s'engager.
